(19) Europäisches Patentamt
European Patent Office
Office européen des brevets

(11) **EP 2 651 020 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
**H02M 1/00** *(2006.01)*  **H01F 27/28** *(2006.01)*
**H01F 27/38** *(2006.01)*

(21) Anmeldenummer: **13163151.7**

(22) Anmeldetag: **10.04.2013**

(54) **Spannungswandler**

Voltage converter

Convertisseur de tension

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2012 DE 102012205784**

(43) Veröffentlichungstag der Anmeldung:
**16.10.2013 Patentblatt 2013/42**

(73) Patentinhaber:
• **RITZ Instrument Transformers GmbH**
  **22041 Hamburg (DE)**
• **Gottfried Wilhelm Leibniz Universität Hannover**
  **30167 Hannover (DE)**

(72) Erfinder:
• **Grambow, Ingmar**
  **22927 Großhansdorf (DE)**

• **Heuck, Klaus**
  **22149 Hamburg (DE)**
• **Däumling, Holger**
  **22885 Barsbüttel (DE)**
• **Buchhagen, Christoph**
  **30159 Hannover (DE)**
• **Hofmann, Lutz**
  **30659 Hannover (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
**EP-A1- 0 102 513    GB-A- 1 182 871**

**Beschreibung**

Die Erfindung betrifft Spannungswandler und insbesondere Nieder- und Mittelspannungswandler.

In den elektrischen Energieversorgungsnetzen, insbesondere in Nieder- und Mittelspannungsnetzen (bis 1 kV bzw. zwischen 1 kV und 75 kV) treten vermehrt Oberschwingungen auf. Diese Oberschwingungen werden vorwiegend von regenerativen Erzeugungsanlagen und Abnehmern mit Frequenzumrichtern verursacht.

Mit Spannungswandlern soll die Nieder- und Mittelspannung derart herabgesetzt werden, dass für niedrige Spannungen ausgelegte und damit kostengünstige Messeinrichtungen zum Einsatz kommen können, um bspw. Spannung oder Spannungsverläufe in einem Nieder- oder Mittelspannungsnetz zu messen. Aus den Ergebnissen der Messeinrichtungen, die hinter einem Spannungswandler angeordnet sind, lassen sich Rückschlüsse auf die Verhältnisse im jeweiligen Nieder- oder Mittelspannungsnetz ziehen.

Oberschwingungen können durch einen THD-Wert ("Total harmonic distortion" bzw. "gesamte harmonische Verzerrung") quantifiziert werden. Der THD ist definiert als das Verhältnis der summierten Leistungen $P_h$ aller Oberschwingungen zur Leistung der Grundschwingung $P_1$. Für ein Spannungssignal ist das Verhältnis der Effektivwert-Spannungen von Oberschwingungen zur Grundschwingung dem Energie-Verhältnis gleichwertig und lässt sich wie folgt berechnen:

$$\text{THD} = \frac{U_2{}^2 + U_3{}^2 + U_4{}^2 + \ldots + U_n{}^2}{U_1{}^2}$$

In dieser Berechnung bedeutet $U_n$ die Effektivwert-Spannung $U_{eff}$ der harmonischen Oberschwingungen n mit n>1 bzw. der Grundschwingung n=1.

Der Anteil an Oberschwingungen bzw. der THD-Wert muss gemäß den geltenden VDE- und IEC-Bestimmungen in Nieder- und Mittelspannungsnetzen im Frequenzbereich bis 2,5 kHz unter 0,08 liegen. Darüber hinaus wird empfohlen, dass der THD-Wert im Frequenzbereich zwischen 2,5 kHz und 9 kHz die Grenze von 0,002 nicht überschreitet. Um die Einhaltung dieser Grenzen zu überprüfen, sollen Spannungswandler mit nachgeschalteten Messeinrichtungen zum Einsatz kommen.

Grundsätzlich sind als Spannungswandler induktive Spannungswandler bekannt. Diese funktionieren nach dem Prinzip des Transformators. Entsprechende Spannungswandler besitzen jedoch grundsätzlich Eigenschwingungen im für die Oberschwingungen in Nieder- und Mittelspannungsnetzen relevanten Frequenzbereich, welche die Übertragung im Spannungswandler stören. So kann beispielsweise ein induktiver 20-kV-Spannungswandler gemäß dem Stand der Technik Eigenschwingungen in den Frequenzbereichen um 6 kHz und 11 kHz aufweisen, wobei das Übersetzungsverhältnis des Spannungswandlers bereits ab 1,5 kHz so stark nicht-linear verzerrt sein kann, dass eine Messung der Oberschwingungen mithilfe eines entsprechenden Spannungswandlers nicht möglich ist. Es kommt also im Prinzip zu einer Engpasswirkung durch den Spannungswandler, wodurch nur Frequenzen unter 1,5 kHz akzeptabel übertragen werden können. Eine Bestimmung von Oberschwingungen in einem Nieder- oder Mittelspannungsnetz über 1,5 kHz ist mit einem induktiven Spannungswandler gemäß dem Stand der Technik daher nicht möglich. Für die Überprüfung der THD-Werte in Nieder- und Mittelspannungsnetzen gilt das gleiche.

Um dennoch Oberschwingungen in Nieder- oder Mittelspannungsnetzen messen zu können, wurde im Stand der Technik versucht, ohmsch-kapazitive Verteiler oder Messsysteme, die auf dem Faraday-Effekt beruhen einzusetzen. Auch wurde erforscht, ob die störenden Eigenschwingungen eines induktiven Spannungswandlers durch parallel geschaltete Kondensatoren an der Stirnseite der Primärspule reduziert werden können. Infolge aktiver Elemente und/oder schnell alternder Kondensatoren sind diese Varianten jedoch alle sehr wartungsintensiv, benötigen teilweise Laborbedingungen und stellen hohe Anforderungen an die Spannungsfestigkeit. Diese machen den Einsatz in Schaltanlagen unpraktikabel oder gar unmöglich.

Aus den Dokumenten EP 0 102 513 A1 und GB 1 182 871 sind Spannungswandler gemäß dem Oberbegriff des Anspruchs 1 bekannt.

Aufgabe der vorliegenden Erfindung ist es, einen wartungsarmen Spannungswandler zu schaffen, der ausgebildet ist, die Oberschwingungen in Nieder- oder Mittelspannungsnetzen derart übertragen zu können, sodass die Oberschwingungen mit einer nachgeschalteten Messeinrichtung ausreichend genau erfasst werden können.

Gelöst wird diese Aufgabe durch einen Spannungswandler gemäß dem Hauptanspruch. Vorteilhafte Weiterbildungen sind Gegenstand der abhängigen Ansprüche.

Demnach betrifft die Erfindung einen induktiven Spannungswandler umfassend wenigstens eine Primärspule, wenigstens eine Sekundärspule und wenigstens einem Spulenkern, wobei die wenigstens eine Sekundärspule jeweils um einen Spulenkern oder um einen Teil des Spulenkerns angeordnet ist, die wenigstens eine Primärspule jeweils um eine Sekundärspule oder um einen Teil einer Sekundärspule angeordnet ist, und zumindest ein Teil der Wicklungen einer Primärspule als Lagen mit Einzellagenschaltung gewickelt sind.

Für gewöhnlich weisen elektrische Spulen eines Spannungswandlers Lagenwicklungen mit entgegengesetztem Wicklungssinn auf. Eine erste Lage hat dabei gegenüber dem Spulenkern eine erste Richtung, in welcher der Spulendraht ausgehend von einem Wicklungsanfang ansteigt. An einem Wicklungsende geht der Spulendraht von der ersten Lage direkt in eine zweite Lage über, bei der die Richtung, in welcher der Spulendraht ansteigt, entgegengesetzt zur Richtung in der ersten Lage ist. Die zweite Lage ist also so gewickelt, dass der Draht vom Wicklungsende wieder zum Wicklungsanfang zurückläuft. Dieser Wechsel im Wicklungssinn setzt sich in den nachfolgenden Lagen fort. Bei dieser Art von Wicklung spricht man auch von "Doppellagenschaltung".

Bei Lagen mit Einzellagenschaltung ist der Wicklungssinn zweier benachbarter Lagen identisch. Lagen mit Einzellagenschaltung sind also jeweils von einem Wicklungsanfang zu einem Wicklungsende in gleicher Richtung gewickelt, ohne dass zwischen ihnen eine entgegengesetzt orientierte Lage wäre.

Die vorliegende Erfindung basiert auf neuen Erkenntnissen zur Spulenphysik. So wurde erkannt, dass sich die Anzahl der Lagen mit Einzellagenschaltung positiv auf den Linearisierungsgrad in einem bei 0 Hz beginnenden, bestimmten Frequenzbereich bzw. in einem bestimmten Frequenzbereich > 0 Hz auswirkt. Mit Linearisierungsgrad ist das Verhältnis der Verzerrungen aufgrund von Eigenschwingungen gegenüber einer idealisierten Spule ohne Eigenschwingungen bezeichnet. Je höher also der Linearisierungsgrad ist, umso geringer sind die Abweichungen von dem idealen Übersetzungsverhältnis des Spannungswandlers. Insbesondere werden die Resonanzfrequenzspitzen und damit die Verzerrungen im Bereich der Eigenfrequenzen eines Spulenpaares aus Primär- und Sekundärspule günstig verändert.

Es ist bevorzugt, wenn mehrere Primärspulen vorgesehen und die Primärspulen in Reihe geschaltet sind. Es wurde erkannt, dass der Frequenzgang einer Spule mit Spulenkern umso besser konstruktiv zu linearisieren ist, je niedriger die Windungszahl der Primärspule und je kleiner der Kerndurchmesser gewählt wird. Durch die Linearisierung können Eigenschwingungen und sonstige starke Verzerrungen in einem bei 0 Hz beginnenden, bestimmten Frequenzbereich bzw. in einem bestimmten Frequenzbereich > 0 Hz ausreichend stark reduziert werden, sodass in diesem Bereich eine im Wesentlichen linear mit der Frequenz veränderlich Verzerrung auftritt. Ist die Verzerrung in dem gewünschten Bereich darüber hinaus ausreichend gering, ist eine Bestimmung der Oberschwingungen in Nieder- oder Mittelspannungsnetzen durch ein, einem entsprechenden Spannungswandler nachgeschaltetes Messgerät mit ausreichender Genauigkeit möglich.

Aufgrund der maximal zulässigen Windungsspannung bei einer Spule und der maximalen Kerninduktion des Kerns sind der für die Linearisierung vorteilhaften Reduzierungen der Windungszahl der Primärspule und des Kerndurchmessers physikalische Grenzen gesetzt. Induktive Spannungswandler mit einem einzigen Spulenpaar aus Primär- und Sekundärspule gemäß dem Stand der Technik können durch entsprechende Veränderung der Windungszahl und des Kerndurchmessers im Hinblick auf ihr Frequenzverhalten deshalb nicht so ausgestaltet werden, dass sie für eine Übertragung der Oberschwingungen aus Nieder- und Mittelspannungsnetzen geeignet sind.

Die Erfindung hat erkannt, dass sich bei einem induktiven Spannungswandler ein vorteilhafter Frequenzgang erreichen lässt, wenn anstelle eines einzelnen Spulenpaares mehrere in Reihe geschaltete Primärspulen vorgesehen werden, wobei wenigstens ein Teil der Windungen wenigstens einer Primärspule als Lagen mit Einzellagenschaltung gewickelt sind. Die Anzahl der Primärspulen wirkt sich dabei auf die Streckung des linearen Bereichs ausgehend von 0 Hz aus. Über die Anzahl der Primärspulen kann also die obere Grenze des linearen Bereichs des erfindungsgemäßen Spannungswandlers beeinflusst werden. Ein erfindungsgemäßer Spannungswandler kann so gestaltet sein, dass er ein ausreichend exaktes Übersetzungsverhältnis aufweist, um die Verhältnisse und die Leistungsqualität in einem Nieder- und/oder Mittelspannungsnetz mit ausreichender Genauigkeit beobachten zu können. Zugleich ermöglicht der erfindungsgemäße Spannungswandler die Übertragung und Beobachtung transienter Vorgänge. Auch muss der erfindungsgemäße Spannungswandler nicht mehr zwingend auf nur eine bestimmte Grundfrequenz, bspw. 50 Hz, genormt sein, sondern kann ohne Weiteres auch Grundfrequenzen von 16,7 Hz, 60 Hz und 400 Hz ausreichend verzerrungsfrei übertragen. Letztlich ist der erfindungsgemäße Spannungswandler auch ausreichend robust und wartungsarm, sodass er für die Bedingungen in Schaltanlagen gut geeignet ist.

Bei mehreren Primärspulen können diese alle um eine gemeinsame Sekundärspule angeordnet sein. Es ist aber auch möglich, dass für jede Primärspule eine separate Sekundärspule vorgesehen ist. Jegliche dazwischen liegende Mischform, bei denen ein Teil der Primärspulen auf einer oder mehrerer gemeinsamer Sekundärspulen angeordnet sind, ist ebenfalls möglich. Sofern mehr als eine Sekundärspule vorgesehen ist, sind die Sekundärspulen bevorzugt in Reihe geschaltet.

Es ist bevorzugt, wenn die Primärspulen jeweils identische Windungszahlen haben. Weiter bevorzugt ist es, wenn die Primärspulen die gleiche Anzahl von Lagen mit Einzellagenschaltung aufweisen. Es ist allerdings auch ausreichend, wenn nur eine Primärspule Lagen mit Einzellagenschaltung aufweist. Sofern mehrere Sekundärspulen vorgesehen sind, ist es ebenfalls bevorzugt, wenn auch die Sekundärspulen jeweils identische Windungszahlen haben.

Im Idealfall sind die einzelnen Primärspulen des Spannungswandlers zueinander identisch bzw. baugleich, d. h. identische Windungszahlen sowie eine identische Anzahl und Anordnung von Lagen mit Einzellagenschaltung. Im Falle von mehreren Sekundärspulen können diese ebenfalls zueinander identisch bzw. baugleich sein. Dies erleichtert die Montage eines erfindungsgemäßen Spannungswandlers und bietet darüber hinaus aufgrund einer möglichen Serienfertigung der Spulen Kostenvorteile. Es ist auch möglich, Primär- und Sekundärspulen während der Produktion bereits als Spulenpaare zusammenzufassen.

Bevorzugt ist es, wenn die Lagen mit Einzellagenschaltung der wenigstens einen Primärspule des Spannungswandlers im unteren Spulenbereich - d. h. in einem, dem Spulenkern zugewandten Bereich - angeordnet sind. Dies bietet konstruktive Vorteile und Vorteile bei der Herstellung. Der untere Spulenbereich kann dabei 30 %, vorzugsweise 20 %, weiter vorzugsweise 10 % der Gesamtanzahl aller Lagen der Spule bzw. der Spulendicke ausmachen. Die Lagen mit Einzellagenschaltung der Primärspule können insbesondere auch die untersten Lagen sein, d. h. die dem Spulenkern nächstliegenden Lagen. Sie sind dann im "untersten Spulenbereich" angeordnet.

Im Falle von mehreren Sekundärspulen können diese jeweils einen eigenen Spulenkern aufweisen. Es ist aber auch möglich, dass wenigstens ein Teil der Sekundärspulen des erfindungsgemäßen Spannungswandlers auf einem gemeinsamen Spulenkern angeordnet sind. In diesem Fall ist besonders bevorzugt, wenn die Sekundärspulen auf verschiedenen Schenkeln des Spulenkerns angeordnet sind.

Der Spulenkern bzw. die Spulenkerne sind bevorzugt aus dünnen Eisenblechen und/oder nanokristallinen oder amorphen Werkstoffen gefertigt. Die Primär- und oder Sekundärspulen sind bevorzugt aus Kupferlackdraht.

Es ist weiterhin möglich, auf einem Kern des erfindungsgemäßen Spannungswandlers eine zusätzliche Sekundärspule zur Messung von Hochfrequenzschwingungen vorzusehen.

Die Erfindung wird nun unter Bezugnahme auf die beigefügten Zeichnungen anhand beispielhafter Ausführungsformen näher beschrieben. Es zeigen:

Figur 1a    ein induktiver Spannungswandler gemäß dem Stand der Technik;

Figur 1b    der Frequenzgang des Spannungswandlers aus Figur 1a;

Figuren 2a,b    ein erstes Ausführungsbeispiel eines erfindungsgemäßen Spannungswandlers;

Figur 3a    ein zweites Ausführungsbeispiel eines erfindungsgemäßen Spannungswandlers;

Figur 3b    der Frequenzgang des Spannungswandlers aus Figur 3a;

Figur 4a    ein drittes Ausführungsbeispiel eines erfindungsgemäßen Spannungswandlers;

Figur 4b    der Frequenzgang des Spannungswandlers aus Figur 4a;

Figuren 5a-e    weitere Ausführungsbeispiele erfindungsgemäßer Spannungswandler; und

Figur 6a,b    schematische Darstellungen von gewöhnlicher Lagenwicklung in Doppellagenschaltung und Wicklungen in Lagen mit Einzellagenschaltung.

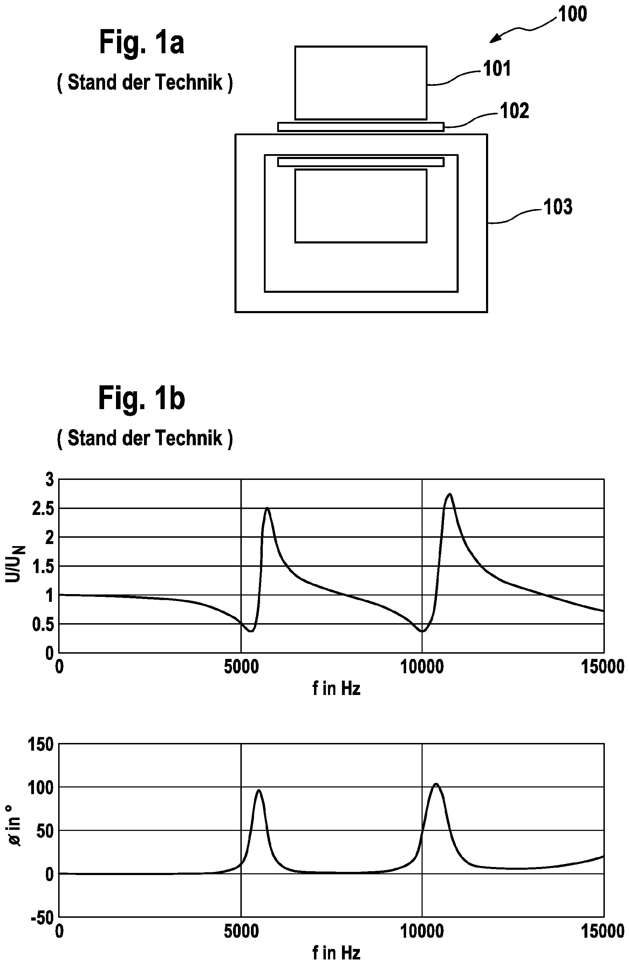

In Figur 1a ist ein induktiver Spannungswandler 100 gemäß dem Stand der Technik dargestellt, der für 20 kV ausgelegt ist. Der Spannungswandler 100 umfasst eine Primärspule 101, eine Sekundärspule 102 und einen Kern 103. Die Sekundärspule 102 ist dabei um den Kern 103 angeordnet, während die Primärspule 101 um die Sekundärspule 102 angeordnet ist.

Der induktive Spannungswandler 100 funktioniert nach dem Prinzip eines Transformators, wobei eine an der Primärspule 101 anliegende höhere Wechselspannung auf eine niedrigere Wechselspannung an der Sekundärspule 102 transformiert wird.

In Figur 1b ist der Frequenzgang des 20-kV-Spannungswandlers 100 aus Figur 1a dargestellt. Damit ein Spannungswandler 100 zur Übertragung von Oberschwingungen in Nieder- und Mittelspannungsnetzen geeignet ist, darf der THD-Wert bis zu einer Frequenz von 2,5 kHz die Grenze von 0,08 nicht überschreiten. Außerdem soll im Frequenzbereich von 2,5 kHz - 9 kHz die THD-Grenze von 0,002 nicht überschritten werden. Damit der THD-Wert in einem Nieder- und Mittelspannungsnetz überwacht werden kann, muss ein zwischen dem Netz und einem Messgerät angeordneter Spannungswandler ausreichend genau die Oberschwingungen übertragen, damit ein aussagekräftiges Messergebnis gewonnen werden kann.

In dem Frequenzgang in Figur 1b sind deutlich die Eigenschwingungen des Spannungswandlers 100 im Bereich von 6 kHz und 11 kHz zu sehen. Bereits ab ca. 1,5 kHz sind so starke Verzerrungen zu erkennen, dass darüber liegende Oberschwingungen an der Primärspule 101 nicht ausreichend genau übertragen werden, um an der Sekundärspule 102 den THD-Wert des Nieder- oder Mittelspannungsnetzes ausreichend genau ermitteln zu können.

Der induktive Spannungswandler 100 gemäß dem Stand der Technik ist also nicht geeignet, Oberschwingungen von Nieder- und Mittelspannungsnetzen ausreichen verzerrungsfrei zu übertragen. Damit können diese auch durch ein mit der Sekundärspule 102 verbundenes Messgerät (nicht dargestellt) nicht ermittelt werden.

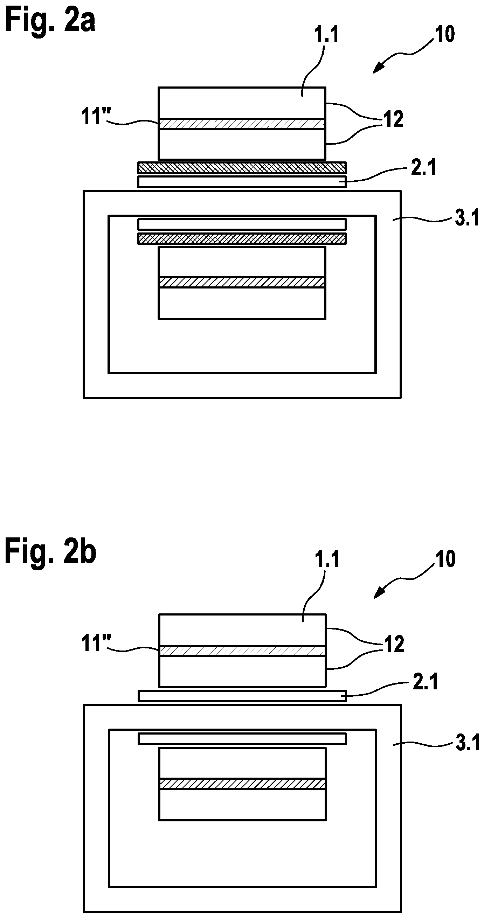

In Figuren 2a,b ist jeweils ein erfindungsgemäßer Spannungswandler 10 dargestellt, der ebenfalls für 20 kV ausgelegt ist. Der Spannungswandler 10 umfasst eine Primärspule 1.1, eine Sekundärspule 2.1, sowie einen Kern 3.1. Die Sekundärspule 2.1 ist um den Kern 3.1 angeordnet, die Primärspule 1.1 um die Sekundärspule 2.1.

Die Primärspule 1.1 zeichnet sich dadurch aus, dass sie in dem mittigen Spulenbereich 11'' einige Lagen in Einzellagenschaltung aufweist. In den übrigen Bereichen 12 ist die Spule gewöhnlich gewickelt, d. h. die Lagen sind in Doppellagenschaltung gewickelt.

Zwischen der Primärspule 1.1 und der Sekundärspule 1.2 ist eine Isolationsschicht vorgesehen, die aber auch entfallen oder durch einen Luftspalt ersetzt werden kann (vgl. Figur 2b).

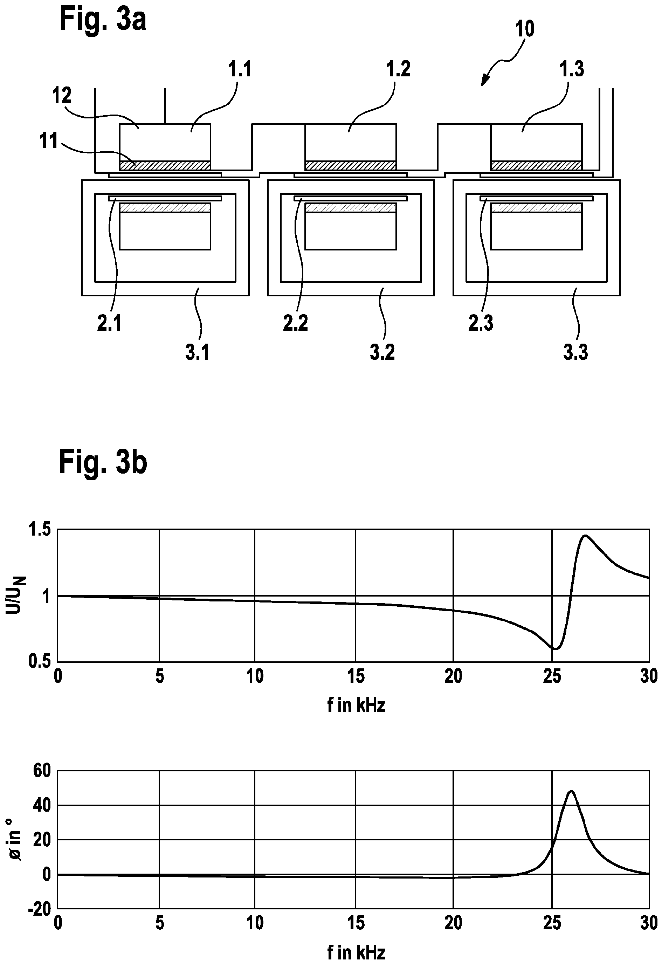

In Figur 3a ist ein weiterer erfindungsgemäßer Spannungswandler 10 dargestellt, der ebenfalls für 20 kV ausgelegt ist. Der Spannungswandler 10 umfasst jeweils drei identische Primärspulen 1.1, 1.2, 1.3, Sekundärspulen 2.1, 2.2, 2.3 sowie Kerne 3.1, 3.2, 3.3. Die Sekundärspulen 2.1, 2.2, 2.3 sind jeweils um einen Kern 3.1, 3.2, 3.3 angeordnet, die Primärspulen 1.1, 1.2, 1.3 jeweils um eine Sekundärspule 2.1, 2.2, 2.3. Die einzelnen Primärspulen 1.1, 1.2, 1.3 sind ebenso wie die einzelnen Sekundärspulen 2.1, 2.2, 2.3 jeweils in Reihe geschaltet.

Die Primärspulen 1.1, 1.2, 1.3 zeichnen sich weiterhin dadurch aus, dass sie im untersten, d. h. dem jeweiligen Kern 3.1, 3.2, 3.3 nächstliegenden Spulenbereich 11 Lagen in Einzellagenschaltung aufweisen, während im übrigen Spulenbereich 12 eine gewöhnliche Lagenwicklung in Doppellagenschaltung vorgesehen. Die Wicklung der Sekundärspulen 2.1, 2.2, 2.3 ist beliebig, aus Fertigungsgründen jedoch regelmäßig eine Lagenwicklung in Doppellagenschaltung. Da die einzelnen Primär- bzw. Sekundärspulen 1.1, 1.2, 1.3, 2.1, 2.2, 2.3 jeweils zueinander identisch sind, weisen sie insbesondere identische Wicklungszahlen auf.

Durch die Aufteilung auf drei Primär- und Sekundärspulen 1.1, 1.2, 1.3, 2.1, 2.2, 2.3 und durch die Lagen in Einzellagenschaltung bei den Primärspulen 1.1, 1.2, 1.3 kann der Frequenzgang des Spannungswandlers 1 gegenüber einem Spannungswandler 100 gemäß dem Stand der Technik (vgl. Figuren 1a, b) für den gleichen Spannungsbereich so verbessert werden, dass eine Übertragung von Oberschwingungen aus Nieder- und Mittelspannungsnetzen möglich ist.

Der Frequenzgang des Spannungswandlers 1 aus Figur 3a ist in Figur 3b dargestellt. Es ist deutlich zu sehen, dass in dem Frequenzbereich bis 2,5 kHz kaum Verzerrungen zu erwarten sind. Das Gleiche gilt auch für den Frequenzbereich bis 9 kHz. Darüber hinaus sind die geringen Verzerrungen in diesem Frequenzbereich auch noch linear, sodass sie bei den Messergebnissen ggf. einfach zu berücksichtigen sind. Die Verzerrungen sind auf jeden Fall so gering, dass eine ausreichend genaue Übertragung von Oberschwingungen in Nieder- und Mittelspannungsnetzen möglich ist.

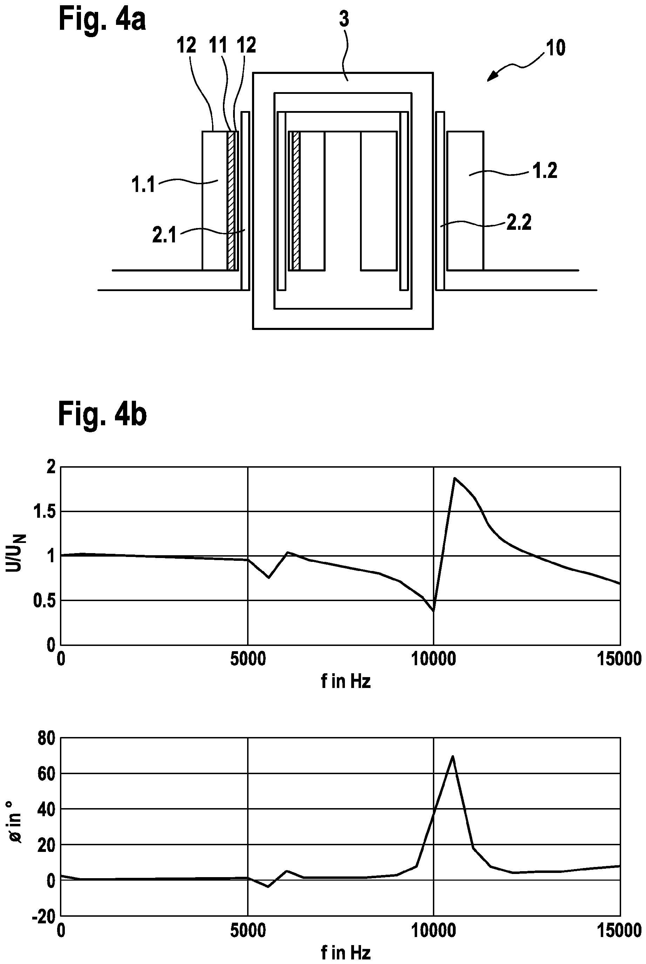

In Figur 4a ist ein weiterer erfindungsgemäßer Spannungswandler 10 dargestellt. Dieser Spannungswandler 10 ist für Spannungen bis 40 kV ausgelegt und umfasst zwei Primärspulen 1.1, 1.2, zwei Sekundärspulen 2.1, 2.2 und einen Kern 3. Die Sekundärspulen 2.1, 2.2 sind jeweils um einen Schenkel des Kerns 3 angeordnet, die Primärspulen 1.1, 1.2 jeweils um eine Sekundärspule 2.1, 2.2. Die beiden Primärspulen 1.1, 1.2 sind ebenso wie die beiden Sekundärspulen 2.1, 2.2 jeweils in Reihe geschaltet.

Die eine Primärspule 1.1 weist einem unteren, d. h. dem Kern 3 naheliegenden Spulenbereich 11' Lagen in Einzellagenschaltung auf, wobei im Spulenbereich 12 zu beiden Seiten des Spulenbereichs 11' eine gewöhnliche Lagenwicklung in Doppellagenschaltung vorgesehen ist. Im dargestellten Ausführungsbeispiel sind die Lagen in Einzellagenschaltung in den unteren 30 % der Primärspule 1.1 angeordnet. Die Wicklungen der anderen Primärspule 1.2 und der Sekundärspulen 2.1, 2.2 sind gewöhnliche Lagenwicklungen in Doppellagenschaltung. Die Wicklungszahl der Primärspule 1.2 ist identisch zu derjenigen der anderen Primärspule 1.1.

In Figur 4b ist der Frequenzgang des Spannungswandlers aus Figur 4a dargestellt. Bis zu einer Frequenz von 5 kHz ist die Übertragung nahezu ideal, d. h., es entstehen nur minimale Verzerrungen. Zumindest in diesem Frequenzbereich ist der 40-kV-Spannungswandler 10 aus Figur 4a also zur Übertragung von Oberschwingungen aus Nieder- und Mittelspannungsnetzen geeignet.

Durch die Aufteilung auf mehrere Primärspulen 1.1, 1.2, 1.3 mit jeweils gleicher Wicklungszahl ist es bei den erfindungsgemäßen Spannungswandlern 10 aus den Figuren 3a und 4a möglich, den von 0 Hz ausgehenden linearen Bereich des Frequenzganges eines Spannungswandlers 10 zu strecken. Über die Anzahl der Primärspulen kann also die obere Grenze des linearen Bereichs des erfindungsgemäßen Spannungswandlers beeinflusst werden. Die Anzahl der Lagen in Einzellagenschaltung bei wenigstens einer Primärspule 1.1, 1.2, 1.3 wirken sich wiederum auf den Linearisierungsgrad des genannten Bereichs aus. Mit Linearisierungsgrad ist das Verhältnis der Verzerrungen einer realen Spule gegenüber einer idealisierten Spule ohne Eigenschwingungen im relevanten Frequenzbereich bezeichnet. Je höher also der Linearisierungsgrad ist, umso geringer sind die Verzerrungen im relevanten Frequenzbereich.

Die Anzahl, Ausgestaltung und Anordnung der Sekundärspulen 2.1, 2.2, 2.3 und der Kerne 3, 3.1, 3.2, 3.3 ist ohne merklichen Einfluss auf den Frequenzgang eines Spannungswandlers 10 und kann daher beliebig gewählt werden. Auch beeinflusst die Anordnung der Lagen in Einzellagenschaltung bei den Primärspulen 1.1, 1.2, 1.3 diesen nicht. Allerdings kann es aus fertigungstechnischen Gründen vorzuziehen sein, die Lagen in Einzellagenschaltung in einem unteren oder im untersten Spulenbereich 11', 11 der Primärspulen 1.1, 1.2, 1.3 anzuordnen.

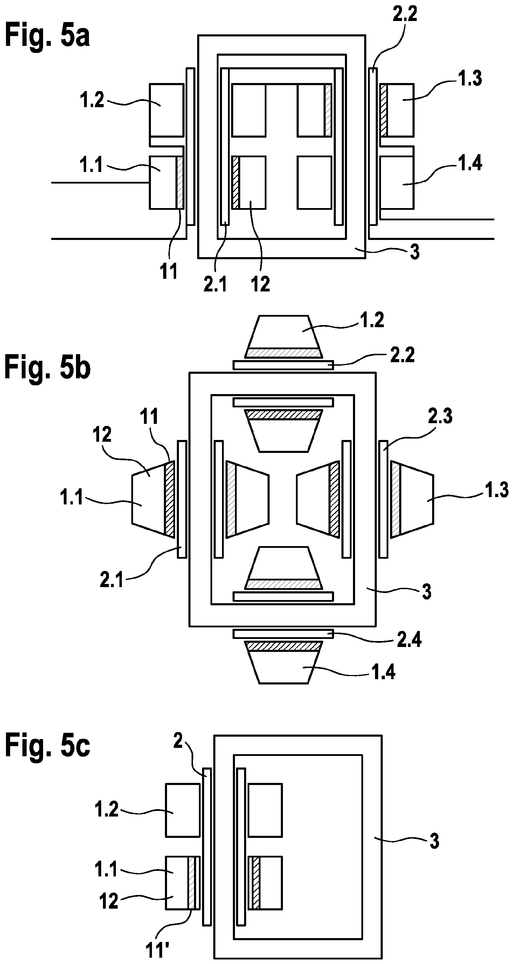

In Figuren 5a bis e sind weitere Ausführungsbeispiele von erfindungsgemäßen Spannungswandlern 10 dargestellt, mit denen sich gegenüber im Spannungsbereich vergleichbaren Spannungswandlern 100 gemäß dem Stand der Technik eine bessere Frequenzübertragung erreichen lässt. Dabei wird auf die in Zusammenhang mit Figuren 3a, b und 4a, b erläuterten grundsätzlichen Konstruktionsprinzipien zurückgegriffen. Es wird daher auf die diesbezüglichen Ausführungen verwiesen.

Der Spannungswandler in Figur 5a umfasst einen Kern 3. Um zwei Schenkel dieses Kerns 3 sind zwei Sekundärspulen 2.1, 2.2 angeordnet. Insgesamt sind vier Primärspulen 1.1, 1.2, 1.3, 1.4 vorgesehen, von denen jeweils zwei um eine der Sekundärspulen 2.1, 2.2 angeordnet sind. So sind die erste und zweite Primärspule 1.1, 1.2 um die erste Sekundärspule 2.1 angeordnet, während die dritte und vierte Primärspule 1.3, 1.4 um die zweite Sekundärspule 2.2 angeordnet sind. Die erste und dritte Primärspule 1.1, 1.3 weisen jeweils im untersten, dem Kern 3 nächstliegenden Spulenbereich 11 Lagen in Einzellagenschaltung auf. Die Primärspulen 1.1, 1.2, 1.3, 1.4 sind ebenso wie die Sekundärspulen 2.1, 2.2 jeweils in Reihe geschaltet. Die Spulengruppe aus erster und zweiter Primärspule 1.1, 1.2 sowie erster Sekundärspule 2.1 ist dabei baugleich mit der Spulengruppe aus dritter und vierter Primärspule 1.1, 1.2 sowie zweiter Sekundärspule 2.1. Die Spulengruppen können bereits vorgefertigt sein.

In Figur 5b ist ein Spannungswandler mit vier baugleichen Primär- und vier baugleichen Sekundärspulen 1.1, 1.2, 1.3, 1.4, 2.1, 2.2, 2.3, 2.4, die um einen gemeinsamen Kern 3 angeordnet sind. Dabei ist jeweils ein Spulenpaar aus Primär- und Sekundärspule 1.1 und 2.1, 1.2 und 2.2, 1.3 und 2.3, 1.4 und 2.4 um einen Schenkel des Kerns 3 angeordnet. Die Primärspulen haben darüber hinaus im untersten Spulenbereich 11 Lagen in Einzellagenschaltung. Die Primär- und Sekundärspulen 1.1, 1.2, 1.3, 1.4, 2.1, 2.2, 2.3, 2.4 sind jeweils in Reihe geschaltet (aus Übersichtlichkeitsgründen nicht dargestellt).

In Figur 5c ist ein Spannungswandler mit zwei Primärspulen 1.1, 1.2, einer Sekundärspule 2 und einem Kern dargestellt.

Die Spulengruppe aus Primärspulen 1.1, 1.2 und Sekundärspule 2 entspricht in weiten Teilen einer entsprechenden Spulengruppe aus Figur 5a, weshalb auf die dortigen Ausführungen verwiesen wird. Im Unterschied zu der Primärspule 1.1 mit Lagen in Einzellagenschaltung befinden sich diese im dargestellten Ausführungsbeispiel jedoch nicht im untersten Spulenbereich 11 der Primärspule 1.1 (vgl. Figur 4a), sondern vielmehr in einem 20 % der Spulendicke umfassenden unteren, dem Kern 3 naheliegenden Spulenbereich 11'. Die Primärspulen 1.1, 1.2 sind in Reihe geschaltet (aus Übersichtlichkeitsgründen nicht dargestellt).

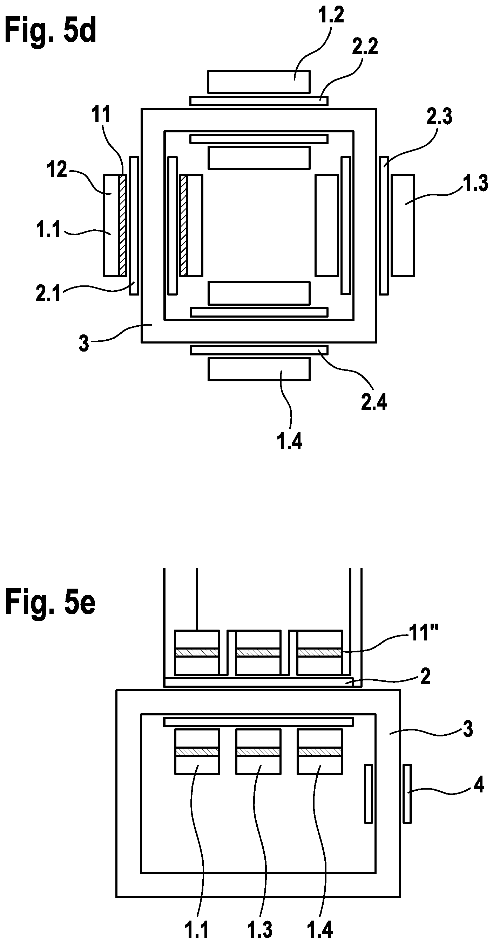

Das Ausführungsbeispiel in Figur 5d ähnelt demjenigen aus Figur 5b. Es wird daher auf die dortigen Ausführungen verwiesen und nachfolgend lediglich auf die Unterschiede eingegangen. Neben der äußeren Form der Primärspulen 1.1, 1.2, 1.3, 1.4 weist bei dem Ausführungsbeispiel in Figur 4d lediglich eine Primärspule 1.1 einen Spulenbereich mit Lagen in Einzellagenschaltung auf. Dabei handelt es sich um den untersten Spulenbereich 11 der Primärspule 1.1. Die Primär-und Sekundärspulen 1.1, 1.2, 1.3, 1.4, 2.1, 2.2, 2.3, 2.4 sind jeweils in Reihe geschaltet (aus Übersichtlichkeitsgründen nicht dargestellt).

In Figur 5e ist ein weiteres Ausführungsbeispiel dargestellt. Es umfasst einen Kern 3 mit einer darum gelegten Sekundärspule 2. Um die Sekundärspule 2 sind drei baugleiche Primärspulen 1.1, 1.2, 1.3 angeordnet, die in Reihe geschaltet sind. Die Primärspulen 1.1, 1.2, 1.3 weisen jeweils einen mittig angeordneten Spulenbereich 11" mit Lagen in Einzellagenschaltung auf. Darüber hinaus ist noch eine zusätzliche Sekundärspule 4 um den Kern 3 vorgesehen.

Mit dieser zusätzlichen Sekundärspule 4 können Hochfrequenzen gemessen werden.

Mit den Spannungswandlern 10 gemäß den Figuren 5a bis f lässt sich gegenüber im Spannungsbereich vergleichbaren Spannungswandlern 100 gemäß dem Stand der Technik eine verbesserte Übertragung in dem relevanten Frequenzbereich erreichen, sodass auch Oberschwingungen in Nieder- und Mittelspannungsnetzen ausreichend genau übertragen werden können. Es existiert daneben selbstverständlich noch eine Vielzahl weiterer Ausführungsmöglichkeiten, die sich aus den beschriebenen Konstruktionsprinzipien ohne weiteres Ableiten lassen.

Die Kerne 3.1, 3.2, 3.3 des Ausführungsbeispiels aus Figur 3a sind aus Eisenblechen, der Kerne 3 des Ausführungsbeispiels aus Figur 4a aus nanokristallinem Werkstoff. Die in den Figuren 5a bis f dargestellten Kerne sind aus amorphen Werkstoffen. Die Primär- und Sekundärspulen 1.1, 1.2, 1.3, 1.4, 2, 2.1, 2.2, 2.3, 2.4 sind aus Kupferlackdraht gewickelt. Zwischen Primär- und Sekundärspule kann darüber hinaus noch eine gesonderte Isolationsschicht oder ein Luftspalt (vgl. bspw. Figur 4d) vorgesehen sein.

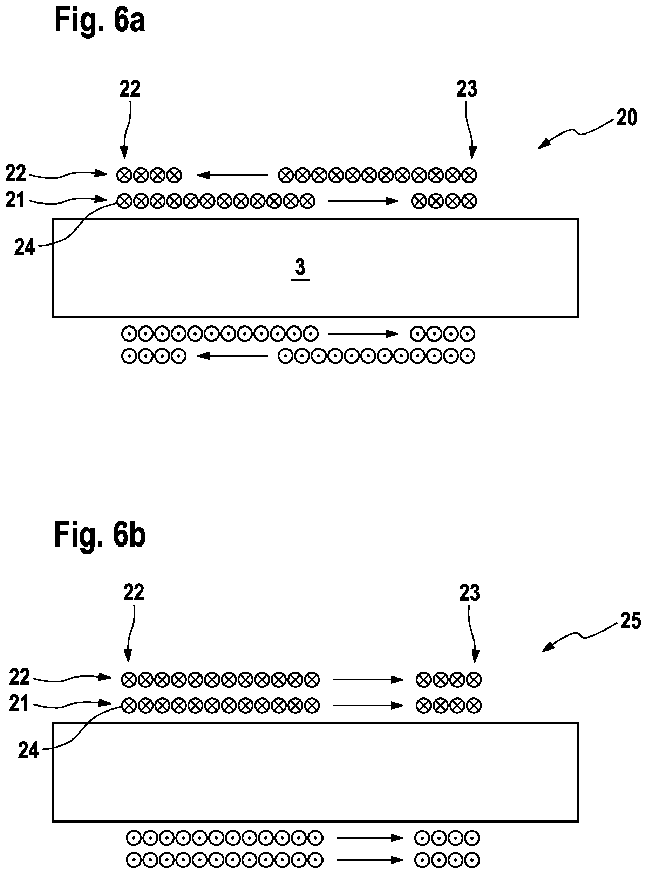

In Figuren 6a, b sind schematisch eine gewöhnliche Lagenwicklung in Doppellagenschaltung (Figur 6a) und einige Lagen in Einzellagenschaltung (Figur 6b) dargestellt.

Bei einer Lagenwicklung in Doppellagenschaltung 20 wird eine erste Lage 21 gegenüber dem Kern 3 ausgehend von einem Wicklungsanfang 22 in Richtung des Wicklungsendes 23 gewickelt. Der Spulendraht 24 steigt also in Richtung vom Wicklungsanfang 22 zum Wicklungsende 23 an. Am Wicklungsende 23 geht der Spulendraht 24 von der ersten Lage 21 direkt in eine zweite Lage über 22. In dieser zweiten Lage 22 ist die Richtung, in welcher der Spulendraht 24 ansteigt, entgegengesetzt zur Richtung in der ersten Lage 22. In der zweiten Lage 22 ist der Spulendraht 24 also so gewickelt, dass er vom Wicklungsende 23 wieder zum Wicklungsanfang 22 zurückläuft. Dieser Wechsel im Wicklungssinn setzt sich in den nachfolgenden Lagen fort.

Bei Lagen in Einzellagenschaltung 25 ist der Wicklungssinn von zwei benachbarten Lagen 21, 22 identisch. Ist die erste Lage 21 in Richtung vom Wicklungsanfang 22 zum Wicklungsende 23 gewickelt, so gilt dies auch für die benachbarte zweite Lage 22. Lagen in Einzellagenschaltung 21, 22 sind also jeweils in die gleiche Richtung gewickelt und weisen den gleichen Wicklungssinn auf, ohne dass zwischen ihnen eine Lage mit entgegengesetztem Wicklungssinn wäre.

**Patentansprüche**

1. Spannungswandler (10) umfassend wenigstens eine Primärspule (1.1, 1.2, 1.3, 1.4), wenigstens eine Sekundärspule (2, 2.1, 2.2, 2.3, 2.4) und wenigstens einen Spulenkern (3, 3.1, 3.2, 3.3), wobei die wenigstens eine Sekundärspule (2, 2.1, 2.2, 2.3, 2.4) jeweils um einen Spulenkern (3.1, 3.2, 3.3) oder um einen Teil des Spulenkerns (3) angeordnet ist und die wenigstens eine Primärspule (1.1, 1.2, 1.3, 1.4) jeweils um eine Sekundärspule (2.1, 2.2, 2.3, 2.4) oder um einen Teil einer Sekundärspule (2) angeordnet ist,
**dadurch gekennzeichnet, dass**
zumindest ein Teil der Wicklungen der wenigstens einen Primärspule (1.1, 1.2, 1.3, 1.4) als Lagen mit Einzellagenschaltung gewickelt sind.

2. Spannungswandler nach Anspruch 1,
**dadurch gekennzeichnet, dass**
mehrere Primärspulen vorgesehen sind, wobei die Primärspulen (1.1, 1.2, 1.3, 1.4) in Reihe geschaltet sind.

3. Spannungswandler nach Anspruch 2,
**dadurch gekennzeichnet, dass**
die Primärspulen (1.1, 1.2, 1.3, 1.4) identische Windungszahlen haben.

4. Spannungswandler nach Anspruch 2 oder 3,
**dadurch gekennzeichnet, dass**
die Primärspulen (1.1, 1.2, 1.3, 1.4) eine identische Anzahl an Lagen mit Einzellagenschaltung haben.

5. Spannungswandler nach einem der vorhergehenden Ansprüche,
**dadurch gekennzeichnet, dass**
die Lagen mit Einzellagenschaltung bei wenigstens einer Primärspule (1.1, 1.2, 1.3, 1.4) in einem unteren Spulenbereich (11') von 30 % der Spulendicke, bevorzugt von 20 % der Spulendicke, weiter bevorzugt von 10 % der Spulendicke angeordnet sind.

6. Spannungswandler nach einem der vorhergehenden Ansprüche,
**dadurch gekennzeichnet, dass**
die Lagen mit Einzellagenschaltung bei wenigstens einer Primärspule (1.1, 1.2, 1.3, 1.4) im untersten Spulenbereich (11) angeordnet sind.

7. Spannungswandler nach einem der vorhergehenden Ansprüche,
**dadurch gekennzeichnet, dass**
mehr als eine Sekundärspule (2.1, 2.2, 2.3, 2.4) vorgesehen ist, und die Sekundärspulen (2.1, 2.2, 2.3, 2.4) vorzugsweise identische Windungszahlen haben.

8. Spannungswandler nach dem vorhergehenden Anspruch,
**dadurch gekennzeichnet, dass**
die gleiche Anzahl an Sekundärspulen (2.1, 2.2, 2.3, 2.4) und Primärspulen (1.1, 1.2, 1.3, 1.4) vorgesehen ist.

9. Spannungswandler nach einem der vorhergehenden Ansprüche,
**dadurch gekennzeichnet, dass**
mehr als ein Kern (3.1, 3.2, 3.3) vorgesehen ist.

10. Spannungswandler nach dem vorhergehenden Anspruch,
**dadurch gekennzeichnet, dass**
die gleiche Anzahl an Kernen (3.1, 3.2, 3.3) und Sekundärspulen (2.1, 2.2, 2.3, 2.4) vorgesehen ist.

11. Spannungswandler nach einem der vorhergehenden Ansprüche,
**dadurch gekennzeichnet, dass**
wenigstens ein Kern (3, 3.1, 3.2, 3.3) aus dünnen Eisenblechen und/oder aus nanokristallinen oder amorphen Werkstoffen gefertigt ist.

12. Spannungswandler nach einem der vorhergehenden Ansprüche,
**dadurch gekennzeichnet, dass**
wenigstens eine Primär- und/oder Sekundärspule aus Kupferlackdraht gewickelt ist.

**Claims**

1. Voltage converter (10) comprising at least one primary coil (1.1, 1.2, 1.3, 1.4), at least one secondary coil (2, 2.1, 2.2, 2.3, 2.4) and at least one coil core (3, 3.1, 3.2, 3.3), wherein the at least one secondary coil (2, 2.1, 2.2, 2.3, 2.4) is arranged around a coil core (3.1, 3.2, 3.3) or around a portion of the coil core (3) in each case and the at least one primary coil (1.1, 1.2, 1.3, 1.4) is arranged around a secondary coil (2.1, 2.2, 2.3, 2.4) or around a portion of a secondary coil (2) in each case,
**characterized in that**
at least some of the windings of the at least one primary coil (1.1, 1.2, 1.3, 1.4) are wound as layers with back-to-front connection.

2. Voltage converter according to Claim 1,

**characterized in that**
a plurality of primary coils are provided, wherein the primary coils (1.1, 1.2, 1.3, 1.4) are connected in series.

3. Voltage converter according to Claim 2,
**characterized in that**
the primary coils (1.1, 1.2, 1.3, 1.4) have an identical number of turns.

4. Voltage converter according to Claim 2 or 3,
**characterized in that**
the primary coils (1.1, 1.2, 1.3, 1.4) have an identical number of layers with back-to-front connection.

5. Voltage converter according to one of the preceding claims,
**characterized in that**
the layers with back-to-front connection are arranged in a lower coil region (11') of 30% of the coil thickness, preferably of 20% of the coil thickness, further preferably of 10% of the coil thickness, in the case of at least one primary coil (1.1, 1.2, 1.3, 1.4).

6. Voltage converter according to one of the preceding claims,
**characterized in that**
the layers with back-to-front connection are arranged in the lowermost coil region (11) in the case of at least one primary coil (1.1, 1.2, 1.3, 1.4).

7. Voltage converter according to one of the preceding claims,
**characterized in that**
more than one secondary coil (2.1, 2.2, 2.3, 2.4) is provided, and the secondary coils (2.1, 2.2, 2.3, 2.4) preferably have identical numbers of turns.

8. Voltage converter according to the preceding claim,
**characterized in that**
the same number of secondary coils (2.1, 2.2, 2.3, 2.4) and primary coils (1.1, 1.2, 1.3, 1.4) is provided.

9. Voltage converter according to one of the preceding claims,
**characterized in that**
more than one core (3.1, 3.2, 3.3) is provided.

10. Voltage converter according to the preceding claim,
**characterized in that**
the same number of cores (3.1, 3.2, 3.3) and secondary coils (2.1, 2.2, 2.3, 2.4) is provided.

11. Voltage converter according to one of the preceding claims,
**characterized in that**
at least one core (3, 3.1, 3.2, 3.3) is made from thin iron sheets and/or from nanocrystalline or amorphous materials.

12. Voltage converter according to one of the preceding claims,
**characterized in that**
at least one primary coil and/or secondary coil is wound from enamelled copper wire.

**Revendications**

1. Convertisseur de tension (10) comportant au moins une bobine primaire (1.1, 1.2, 1.3, 1.4), au moins une bobine secondaire (2, 2.1, 2.2, 2.3, 2.4) et au moins un noyau de bobine (3, 3.1, 3.2, 3.3), l'au moins une bobine secondaire (2, 2.1, 2.2, 2.3, 2.4) étant respectivement disposée autour d'un noyau de bobine (3.1, 3.2, 3.3) ou autour d'une partie du noyau de bobine (3) et l'au moins une bobine primaire (1.1, 1.2, 1.3, 1.4) étant respectivement disposée autour d'une bobine secondaire (2.1, 2.2, 2.3, 2.4) ou autour d'une partie d'une bobine secondaire (2),
**caractérisé en ce que**
au moins une partie des enroulements de l'au moins une bobine primaire (1.1, 1.2, 1.3, 1.4) sont enroulés sous forme de couches avec commutation des couches individuelles.

2. Convertisseur de tension selon la revendication 1,
**caractérisé en ce qu'**il existe plusieurs bobines primaires, les bobines primaires (1.1, 1.2, 1.3, 1.4) étant branchées en série.

3. Convertisseur de tension selon la revendication 2,
**caractérisé en ce que** les bobines primaires (1.1, 1.2, 1.3, 1.4) possèdent des nombres d'enroulements identiques.

4. Convertisseur de tension selon la revendication 2 ou 3, **caractérisé en ce que** les bobines primaires (1.1, 1.2, 1.3, 1.4) possèdent un nombre identique de couches avec commutation des couches individuelles.

5. Convertisseur de tension selon l'une des revendications précédentes, **caractérisé en ce que** sur au moins une bobine primaire (1.1, 1.2, 1.3, 1.4), les couches avec commutation des couches individuelles sont disposées dans une zone de bobine inférieure (11') ayant 30 % de l'épaisseur de la bobine, de préférence 20 % de l'épaisseur de la bobine, encore de préférence 10 % de l'épaisseur de la bobine.

6. Convertisseur de tension selon l'une des revendications précédentes, **caractérisé en ce que** sur au moins une bobine primaire (1.1, 1.2, 1.3, 1.4), les couches avec commutation des couches individuelles sont disposées dans la zone de bobine la plus basse (11).

**7.** Convertisseur de tension selon l'une des revendications précédentes, **caractérisé en ce qu'**il comporte plus d'une bobine secondaire (2.1, 2.2, 2.3, 2.4) et les bobines secondaires (2.1, 2.2, 2.3, 2.4) possèdent de préférence des nombres d'enroulements identiques.

**8.** Convertisseur de tension selon l'une des revendications précédentes, **caractérisé en ce qu'**il comporte le même nombre de bobines secondaires (2.1, 2.2, 2.3, 2.4) et de bobines primaires (1.1, 1.2, 1.3, 1.4) .

**9.** Convertisseur de tension selon l'une des revendications précédentes, **caractérisé en ce qu'**il comporte plus qu'un noyau (3.1, 3.2, 3.3).

**10.** Convertisseur de tension selon l'une des revendications précédentes, **caractérisé en ce qu'**il comporte le même nombre de noyaux (3.1, 3.2, 3.3) et de bobines secondaires (2.1, 2.2, 2.3, 2.4).

**11.** Convertisseur de tension selon l'une des revendications précédentes, **caractérisé en ce qu'**au moins un noyau (3.1, 3.2, 3.3) est fait de tôles en fer minces et/ou en matériaux nanocristallins ou amorphes.

**12.** Convertisseur de tension selon l'une des revendications précédentes, **caractérisé en ce qu'**au moins une bobine primaire et/ou secondaire est enroulée à partir d'un fil émaillé en cuivre.

# Fig. 1a

( Stand der Technik )

# Fig. 1b

( Stand der Technik )

**Fig. 2a**

**Fig. 2b**

## Fig. 3a

## Fig. 3b

# Fig. 4a

# Fig. 4b

**Fig. 5a**

**Fig. 5b**

**Fig. 5c**

Fig. 5d

Fig. 5e

## Fig. 6a

## Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0102513 A1

- GB 1182871 A